# EUROPEAN PATENT APPLICATION

(11) **EP 2 535 588 A1**
(43) Date of publication of application: **19.12.2012**
(21) Application number: 11741874.9
(22) Date of filing: 28.01.2011
(51) Int. Cl.: F04B 53/10, F04B 15/02, F04B 49/22

(54) **DISTRIBUTE VALVE FOR CONCRETE PUMP, CONCRETE PUMP, CONTROL METHOD THEREOF AND CONCRETE PUMP TRUCK**

(30) Priority: 09.02.2010 CN 201010114510
(71) Applicant: Hunan Sany Intelligent Control Equipment Co., Ltd, Hunan 410100 (CN); Sany Heavy Industry Co., Ltd., Changsha Hunan 410100 (CN)
(72) Inventor: YI, Xiuming, Hunan 410100 (CN); ZHANG, Chunguang, Hunan 410100 (CN); LIU, Guifeng, Hunan 410100 (CN)
(74) Representative: Müller Schupfner & Partner
(86) International application number: PCT/CN2011/070782
(87) International publication number: WO 2011/098003

(57) **Abstract**

A distribution valve for a concrete pump, the concrete pump, a control method thereof and a concrete pump truck are provided. In which, the distribution valve comprises a valve body (200) and a wear resistance plate (300). The valve body (200) comprises a first suction pipe (210) and a first pumping pipe (220), the rear end of the first suction pipe (210) is communicated with an outlet (401) of a material container (400) so as to communicate the material container (400) and a conveying cylinder. The rear end of the first pumping pipe (220) is rotatablely connected with a delivery line of the concrete pump so as to communicate the conveying cylinder and the delivery line. The valve body (200) can be switched between a first state and a secondary state under the driving of a drive mechanism (500). In the first state, concrete slurry is sucked into the conveying cylinder through the first suction pipe (210), and in the secondary state, the conveying cylinder pumps the concrete slurry through the first pumping pipe (220). Because of the distribution valve, the concrete pump can thoroughly employ the self-flowing characteristic of concrete slurry in order to increase the suction performance of the concrete pump. In the meanwhile, because the distribution valve has higher pressure enduring capacity, the concrete pump can make concrete slurry have higher pressure via the conveying cylinder, thereby meeting the requirements of high-pressure pumping of concrete slurry.

## Description

### CROSS-REFERENCE TO RELATED APPLICATION

This application claims the priority of Chinese Patent Application No. 201010114510.3, entitled "DISTRIBUTION VALVE FOR CONCRETE PUMP, CONCRETE PUMP AND CONTROL METHOD THEREOF AND CONCRETE PUMP TRUCK", filed on February 9, 2010, which is incorporated herein by reference in its entirety.

### FIELD OF THE INVENTION

The present invention relates to a technique of concrete pump, and more specifically relates to a distribution valve for concrete pump and also relates to a concrete pump with this distribution valve and a control method thereof and a concrete pump truck.

### BACKGROUND OF THE INVENTION

Presently, a concrete pump is one of widely used concrete machinery. The concrete pump generally includes a material container (i.e., hopper) a conveying cylinder, a distribution valve and a delivery line (i.e., conveying pipe). The material container is adapted to store concrete slurry. The conveying cylinder stretches and withdraws under driving of the hydraulic cylinder. The distribution valve is used to communicate the conveying cylinder with the material container during a first predetermined time period in order to make the conveying cylinder to suck appropriate amount of concrete slurry; and to communicate the conveying cylinder with the delivery line during a second predetermined time period in order to make the conveying cylinder to pump the sucked concrete slurry into the delivery line and conveys the sucked concrete slurry to a predetermined position under the pressure of the conveying cylinder.

Presently, in worldwide markets, there are mainly two kinds of distribution valves for a concrete pump, which are a gate-type distribution valve (i.e., gate valve) and an S-type distribution valve (i.e., S-valve).

The gate-type distribution valve mainly communicates a conveying cylinder with an outlet of the material container during a first predetermined time period by means of the up-down movement of two gates in the distribution valve in order to make the conveying cylinder to suck materials; and communicates the conveying cylinder with a delivery line during a second predetermined time period via a Y-shape pipe in order to make the conveying cylinder to pumps materials. The gate-type distribution valve has the advantage that the outlet is located at the bottom of the material container, therefore the self-flowing characteristic of the concrete slurry may be fully utilized to make the conveying cylinder suck the concrete slurry more effectively, and thus the concrete pump has a better sucking performance. Moreover, since only stirring vanes are provided in the material container, the material container has a relatively high volumetric efficiency, thus improving the pumping efficiency of the concrete pump. In particular to coarse aggregate concrete, the above-mentioned advantages are more significant. However, there are also disadvantages in the gate-type distribution valve. For example, since the communicating state between the conveying cylinder and the delivery line is realized by switching the gate positions, the pressure of the concrete slurry in the delivery line is limited by the fit situation of the periphery of the gate when the conveying cylinder pumps material. Considering the requirement of switching the gate positions and the operation scenes of conveying concrete slurry, the gate-type distribution valve cannot withstand a relatively large operating pressure (in general, about 8Mpa) due to the fit situation of the periphery of the gate. Thus the gate-type distribution valve may not meet the requirements of pumping concrete slurry at a high pressure, and may not pump concrete slurry to a higher predetermined position, which disadvantageously affect the pumping efficiency of the concrete pump and limit the applications of the concrete pump.

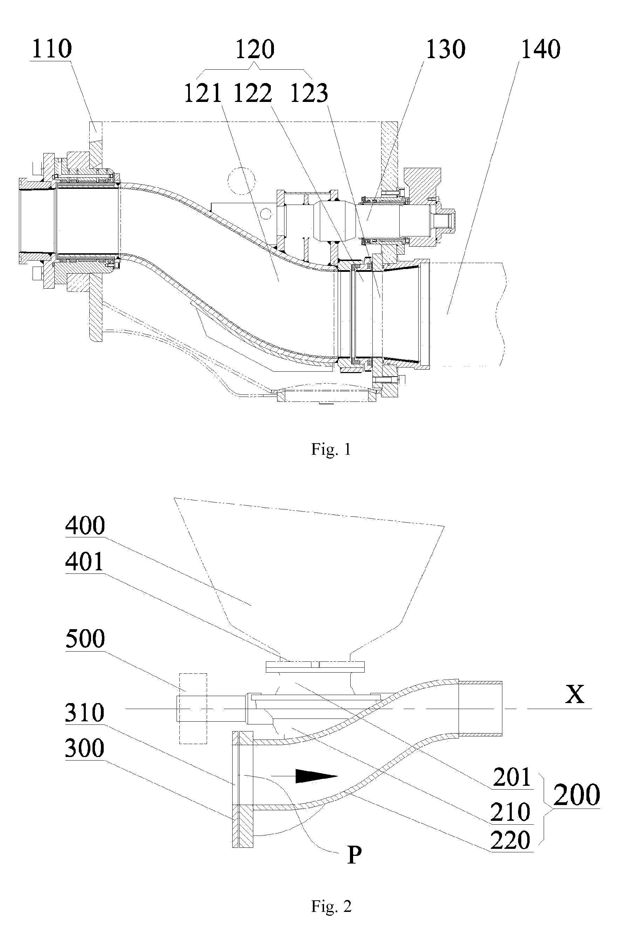

Referring to Fig. 1, a structural diagram of an S-type distribution valve according to the prior art is shown. In Fig. 1, a material container 110 is shown in double dot dash line. The S-type distribution valve 120 includes an S-shape bend pipe 121, a connecting ring 122 and a glasses plate 123. The S-shape bend pipe 121 is mounted in the material container 110. An outlet end of the S-shape bend pipe 121 is rotatably mounted on one sidewall of the material container 110 and is in communication with a delivery line located outside of the material container 110. The connecting ring 122 is mounted at an inlet end of the S-shape bend pipe 121. The glasses plate 123 is fixed on the other sidewall of the material container 110 and has two delivery holes communicating with two conveying cylinder 140 respectively. The inlet end of the S-shape bend pipe 121 and the connecting ring 122 may swing laterally in the material container 110 under the driving of a driving mechanism 130, and communicate with the two conveying cylinders 140 by the corresponding delivery holes in the glasses plate 123 successively. Thus, the two conveying cylinders 140 may pump concrete slurry to the delivery line via the S-shape bend pipe 121 alternately. The S-shape distribution valve has some advantages. For example, the generated high pressure during pumping materials by the conveying cylinder mainly acts on the inner wall of the S-shape bend pipe 121, therefore, there is uniform tension on the whole S-shape bend pipe 121 which has a circular cross section, and thus the S-shape distribution valve may withstand relatively high pressure. Furthermore, the connecting ring 122 is mounted on the inlet end of the S-shape bend pipe 121 by means of a rubber spring or other elastic components, and the floating sealing structure is used between the glasses plate 123 and the connecting ring 122, so as to maintain the predetermined pressing force between the connecting ring 122 and the glasses plate 123, thereby keeping a better sealing performance. In addition, the deformation of the rubber spring may automatically compensate the gap generated by wearing. Thus, the S-shape distribution valve 120 may further have a larger operating pressure which may be up to 16Mpa or even more. Therefore, by utilizing the S-shape distribution valve 120, the concrete pump may pump concrete slurry to a longer distance or to a higher position, so as to meet more requirements. However, the S-shape distribution valve 120 has some disadvantages, such as that the S-shape bend pipe 121 of the S-shape distribution valve 120 is located in the material container 110 and occupies a part of volume of the material container 110, so as to disadvantageously affect the flowing of concrete slurry, thus affecting the sucking performance of the concrete pump. In addition, the pumping and drawing of the conveying cylinder are both implemented by means of the S-shape bend pipe 121, which speeds up the wearing of the S-shape bend pipe 121 and shortens the service life of the S-shape bend pipe 121.

In view of the disadvantages of these two kinds of distribution valve described above, the technical problem which is difficult to be solved in the prior art is to meet the requirements of pumping concrete slurry at a high pressure while improving the sucking performance of the concrete pump.

### SUMMARY OF THE INVENTION

In view of the technical problems mentioned above, the object of the first aspect of the present invention is to provide a distribution valve for a concrete pump which may not only improve a material sucking performance of a concrete pump and may meet the requirement for pumping concrete slurry at a high pressure.

Based on the above distribution valve, the object of the second aspect of the present invention is to provide a concrete pump and a concrete pump truck which have the distribution valve described above.

In addition, based on the above-mentioned distribution valve for the concrete pump, the object of the third aspect of the present invention is to provide a method for controlling a concrete pump.

In order to achieve the object of the first aspect, the distribution valve for the concrete pump according to the present invention includes a valve body. The valve body includes a first material suction pipe and a first material pumping pipe. A rear end of the first material suction pipe is in communication with an outlet of a material container, and the rear end of the first material pumping pipe rotatably communicates with a delivery line of the concrete pump. The valve body is driven by a driving mechanism to switch between a first state where a front end of the first material suction pipe is in communication with a conveying cylinder, and a second state where a front end of the first material pumping pipe is in communication with the conveying cylinder.

The distribution valve for the concrete pump preferably further comprises a wear resistant plate, which has a delivery hole, through which the first material suction pipe or the first material pumping pipe is in communication with the conveying cylinder, wherein front ends of the first material suction pipe and the first material pumping pipe are respectively provided with connecting rings matched with the wear resistant plate. In the first state the hole of the connecting ring of the first material suction pipe is in communication with the delivery hole, and in the second state the hole of the connecting ring of the first material pumping pipe is in communication with the delivery hole.

Preferably, the wear resistant plate has two delivery holes, respectively a first delivery hole and a second delivery hole. The valve body further includes a second material pumping pipe. A front end of the second material pumping pipe is provided with a connecting ring matched with the wear resistant plate, and a rear end of the second material pumping pipe rotatably communicates with the delivery line. In the first state, the hole of the connecting ring of the first material suction pipe communicates with the first delivery hole and the hole of the connecting ring of the second material pumping pipe communicates with the second delivery hole; and in the second state, the first material suction pipe communicates with the second delivery hole and the hole of the connecting ring of the first material pumping pipe communicates with the first delivery hole.

Preferably, the valve body also includes a universal joint. The universal joint has one end rotatably connected with the rear end of the first material suction pipe and the other end connected with the outlet of the material container.

Optionally, the first material suction pipe, the first material pumping pipe and the second material pumping pipe are synchronously swayed under the driving of driving mechanism.

Optionally, the rear end of the first material pumping pipe and the rear end of the second material pumping pipe converge to form an outlet end which rotatably communicates with the delivery line. The first material pumping pipe and the second material pumping pipe are driven by the driving mechanism to rotate about a central axis of the outlet end.

Preferably, the valve body further includes a universal joint. The universal joint has one end rotatably connected with the rear end of the first material suction pipe. The first material pumping pipe is fixed relative to the first material suction pipe.

Preferably, the first material pumping pipe and the second material pumping pipe are symmetrically disposed with respect to the first material suction pipe

Preferably, the wear resistant plate has two delivery holes, i.e. a first delivery hole and a second delivery hole. The valve body further includes a second material suction pipe. A front end of the second material suction pipe is provided with a connecting ring matching with the wear resistant plate, and a rear end of the second material suction pipe communicates with the outlet of the material container. In the first state, the hole of the connecting ring of the first material suction pipe communicates with the first delivery hole, and the hole of the connecting ring of the first material pumping pipe communicates with the second delivery hole; and in the second state, the first material pumping pipe communicates with the second delivery hole, and the hole of the connecting ring of the second material suction pipe communicates with the first delivery hole.

Optionally, the first material suction pipe, the first material pumping pipe and the second material suction pipe are synchronously swayed under the driving of the driving mechanism.

Optionally, the rear end of the first material suction pipe and the rear end of the second material suction pipe converge to form a material suction passage which is connected with the outlet of the material container.

Preferably, the valve body further includes a universal joint. The universal joint has one end rotatably connected with a rear end of the material suction passage.

Preferably, the first material suction pipe and the second material suction pipe are symmetrically disposed with respect to the first material pumping pipe.

To achieve the object of the second aspect described above, the concrete pump according to the present invention includes not only a material container, a conveying cylinder, a delivery line, and a driving mechanism but also any one of the distribution valves for the concrete pump mentioned above.

Preferably, the distribution valve for the concrete pump is provided outside the material container.

The concrete pump truck according to the present invention includes a chassis, a boom system, and the above-mentioned concrete pump. The concrete pump is mounted on the chassis. The delivery line is in communication with a delivery line of the boom system.

In order to achieve the object of the second aspect described above, the present invention provides a method for controlling a concrete pump. The concrete pump includes two conveying cylinders and any one of the distribution valves for the concrete pump described above, and the two conveying cylinders are referred to as a first conveying cylinder and a second conveying cylinder respectively. The method comprises the steps of:
S110, sucking concrete slurry from the material container through the first material suction pipe by the first conveying cylinder, and pumping concrete slurry through the second material pumping pipe by the second conveying cylinder;
S 120, switching the valve body of the distribution valve to the other state; and
S 130, pumping concrete slurry through the first material pumping pipe by the first conveying cylinder, and sucking concrete slurry from the material container through the first material suction pipe by the second conveying cylinder.

The present invention also provides another method for controlling a concrete pump, wherein, the concrete pump includes two conveying cylinders and any one of the distribution valves for the concrete pump described above. The two conveying cylinders are referred to as a first conveying cylinder and a second conveying cylinder respectively. The method comprises the steps of:
5210, sucking concrete slurry from the material container through the first material suction pipe by the first conveying cylinder, and pumping concrete slurry through the first material pumping pipe by the second conveying cylinder;
S220, switching the valve body of the distribution valve to the other state; and
S230, pumping concrete slurry through the first material pumping pipe by the first conveying cylinder, and sucking concrete slurry from the material container through the second material suction pipe by the second conveying cylinder.

Compared with the prior art, the distribution valve for the concrete pump according to the present invention is located at a predetermined position outside of the material container. The valve body of the distribution valve includes at least two pipes. One of the pipes, i.e. the first material suction pipe, communicates the material container with the conveying cylinder to facilitate the conveying cylinder sucking concrete slurry; and the other pipe, i.e. the first material pumping pipe, serves to communicate the conveying cylinder with the delivery line to pump concrete slurry. By switching between the first state and the second state, the concrete pump may pump concrete slurry to the outside in a predetermined manner. Since the distribution valve is located outside of the material container, and preferably located under the material container, the concrete pump may make full use of the self-flowing characteristic of concrete flurry, so that concrete flurry may smoothly enter into the conveying cylinder to improve the sucking performance of the concrete pump. Besides, during pumping of concrete slurry, concrete slurry is pumped to the outside through the first material pumping pipe, the high pressure of concrete slurry mainly acts on the inner wall of the first material pumping pipe, and the first material pumping pipe uniformly bears the force. Thus, the distribution valve has relatively high pressure withstanding capacity, and concrete slurry may have relatively high pressure by the conveying cylinder, so as to meet the requirement of pumping concrete slurry at a high pressure.

In a further preferred technical solution, the second material pumping pipe communicating with the delivery line is provided. In the first state, the holes of the connecting rings of the front ends of the first material suction pipe and the second material pumping pipe are in communication with two delivery holes respectively. In this case, one conveying cylinder may pump concrete slurry through the second material pumping pipe, and the other conveying cylinder may suck concrete slurry through the first material suction pipe. In the second state, the holes of the connecting rings of the front ends of the first material suction pipe and the first material pumping pipe are in communication with the two delivery holes respectively. In this case, one conveying cylinder may suck concrete slurry through the first material suction pipe, and the other conveying cylinder may pump concrete slurry through the first material pumping pipe. The distribution valve in this technical solution may repeatedly pump concrete slurry to the outside through the first material pumping pipe and the second material pumping pipe, which may reduce the wearing rate of the valve body and prolong the service life and the maintenance intervals of the valve body.

In a further preferred technical solution, the universal joint is connected between the rear end of the first material pumping pipe and the outlet of the material container. This technical solution may improve the sealing performance of the distribution valve while facilitating the state switching of the distribution valve, so as to prevent concrete slurry from leaking at the junction between the rear end of the first material suction pipe and the material container.

In a further preferred technical solution, the rear end of the first material pumping pipe and the rear end of the second material pumping pipe converge to form the outlet end, so as to form a "Y" shape structure body. Such a structure body may reduce the pumping resistance when concrete slurry is pumped and improve the service performance of the concrete pump. The outlet end rotatably communicates with the delivery line. The "Y" shape structure body may be moved under driving of one driving mechanism, so as to facilitate the switching of the distribution valve between the first state and the second state. In a further technical solution, the universal joint is connected between the rear end of the first material suction pipe and the outlet of the material container, and is rotatably connected with the rear end of the first material suction pipe. In this case, the first material suction pipe may be fixed relative to the first material pumping pipe, this is, fixed with the "Y" shape structure body. In this way, the state switching of the distribution valve may be realized only by one driving mechanism.

In an optional technical solution, the second material suction pipe communicating with the material container is provided. In the first state, the holes of the connecting rings of the front ends of the first material suction pipe and the first material pumping pipe are aligned with two delivery holes respectively so that one conveying cylinder may suck concrete slurry through the first material suction pipe, and the other conveying cylinder may pump concrete slurry through the first material pumping pipe. In the second state, the holes of the connecting rings of the front ends of the first material pumping pipe and the second material suction pipe are in communication with two delivery holes respectively. In this case, one conveying cylinder may pump concrete slurry through the first material pumping pipe, and the other conveying cylinder may suck concrete slurry through the second material suction pipe. The distribution valve in this technical solution may be adaptable to the double-delivery-cylinder structure of the concrete pump in the prior art while achieving the object of the present invention.

Based on the above distribution valve, the concrete pump with this distribution valve may also provide the corresponding technical effects. In a preferred technical solution, the outlet is oriented downwardly, so that concrete slurry in the material container may more easily flow into the corresponding conveying cylinder, thereby further improving the sucking performance of the concrete pump. The concrete pump truck which is provided based on the concrete pump also provides the corresponding technical effects.

Based on the above-mentioned distribution valve, the method for controlling the concrete pump may sufficiently utilize the characteristics of the above-mentioned distribution valve, so as to meet the requirement of pumping concrete slurry at a high pressure while improving the sucking performance of the concrete pump, thus improving the operating efficiency of the concrete pump and lowering the wearing rate of the distribution valve.

### BRIEF DESCRIPTION OF THE DRAWINGS

Fig. 1 is a structural diagram illustrating an S-shape distribution valve in the prior art;
Fig. 2 is a structural schematic diagram illustrating a distribution valve for a concrete pump according to the first embodiment of the present invention, which also illustrates a pumping principle of the distribution valve;
Fig. 2-1 is a structural schematic diagram illustrating the distribution valve for the concrete pump shown in Fig.2 in a first state;
Fig. 2-2 is a structural schematic diagram illustrating the distribution valve for the concrete pump shown in Fig. 2 in a second state;
Fig. 3 is a three-dimensional schematic diagram illustrating the structure of a distribution valve for a concrete pump according to the second embodiment of the present invention;
Fig. 3-1 is a structural schematic diagram illustrating the distribution valve for the concrete pump shown in Fig. 3 in a first state;
Fig. 3-2 is a structural schematic diagram illustrating the distribution valve for the concrete pump shown in Fig. 3 in a second state;
Fig. 3-3 is a schematic diagram illustrating the sucking principle of the distribution valve for the concrete pump shown in Fig. 3;
Fig. 4 is a flowchart diagram illustrating a method for controlling a concrete pump according to the present invention;
Fig. 5 is a structural schematic diagram illustrating a distribution valve for a concrete pump according to the third embodiment of the present invention;
Fig. 6 is a flowchart diagram illustrating another method for controlling a concrete pump according to the present invention;
Fig. 7-1 is a schematic diagram illustrating the movement principle of a distribution valve for a concrete pump according to the fourth embodiment of the present invention in a first state; and
Fig. 7-2 is a schematic diagram illustrating the movement principle of the distribution valve for the concrete pump according to the fourth embodiment of the present invention in a second state.

### DETAILED DESCRIPTION OF THE PRESENT INVENTION

The present invention will be described in detail hereinafter in conjunction with the drawings. The description in this section is only illustrative and explanatory, and should not be considered to limit the protection scope of the present invention. It should be noted that although technical solutions according to the present invention is described by taking a concrete pump for pumping concrete slurry as an example, the technical solutions are also applied to other pumping equipments or mechanisms for pumping mud or other sticky matter which has the same properties as concrete slurry.

In order to clearly describe the technical solutions according to the present invention, a distribution valve for a concrete pump will be described hereinafter in conjunction with the structure of the concrete pump.

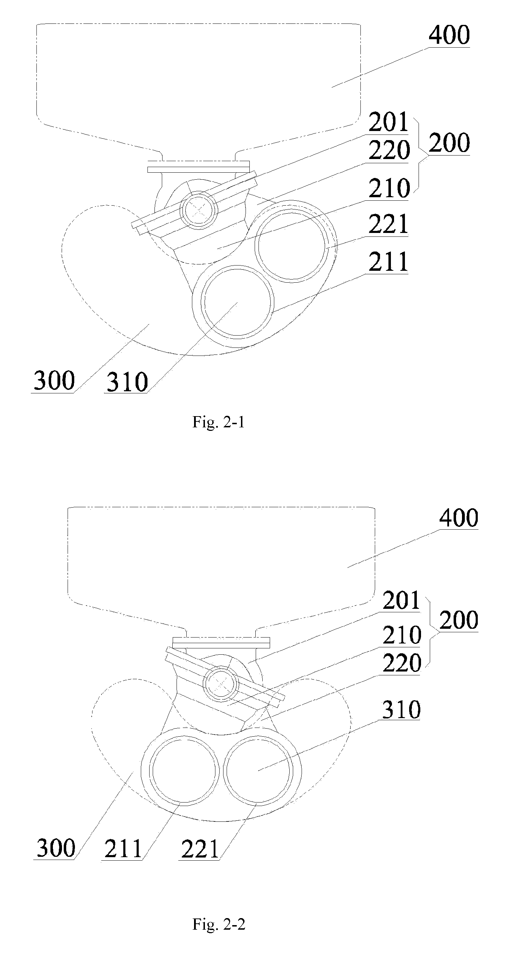

Referring to Figs. 2, 2-1 and 2-2, Fig. 2 is a structural schematic diagram illustrating a distribution valve for a concrete pump according to the first embodiment of the present invention, which also illustrates a material pumping principle of the distribution valve. Fig. 2-1 is a structural schematic diagram illustrating the distribution valve for the concrete pump shown in Fig. 2 in a first state; and Fig. 2-2 is a structural schematic diagram illustrating the distribution valve for the concrete pump shown in Fig. 2 in a second state. In the drawings, for the purpose of showing the structure of the distribution valve clearly, the outline of a material container (i.e., hopper) 400 is shown in double dot dash line. In Figs. 2-1 and 2-2, for clearly showing the relation between a connecting ring and a wear resistant plate, the outline of the wear resistant plate is shown in a dash line.

In the following description, taking the operating plane P shown in Fig. 2 as a reference, the left side of the operating plane P is defined as the front and the right side thereof is defined as the rear.

A distribution valve for a concrete pump according to the first embodiment includes a valve body 200 and a wear resistant plate 300. The valve body 200 includes a first material suction pipe 210 and a first material pumping pipe 220. Front ends of the first material suction pipe 210 and the first material pumping pipe 220 are provided with a connecting ring 211 and a connecting ring 221, respectively. The connecting ring 211 and the connecting ring 221 have annular shape and cooperate with the wear resistant plate 300. The wear resistant plate 300 may have the same material and property as a glasses plate in the prior art. When the state of the distribution valve is switched, the connecting ring 211 and the connecting ring 221 slide in a predetermined route along the operating plane P of the wear resistant plate 300, such that holes of the connecting ring 211 and the connecting ring 221 are alternatively in communication with a delivery hole 310 of the wear resistant plate 300 in a certain period.

Preferably, a rear end of the first material suction pipe 210 is in movable connection with an outlet 401 of the material container 400. The term "movable connection" indicates that, when the material container 400 is fixed, the first material suction pipe 210 may be swung correspondingly to ensure that a conveying cylinder may smoothly suck material from the material container 400, so as to adapt to the requirement of switching the state of the distribution valve. The movable connection may be realized by a flexible structure or a hinge structure. The rear end of the first material pumping pipe 220 is rotatably connected with a delivery line (i.e., conveying pipe) (not shown) of the concrete pump, such that the first material pumping pipe 220 is kept in communication with the delivery line when the state of the distribution valve is switched.

In the embodiment, the first material suction pipe 210 is fixed relative to the first material pumping pipe 220, so that the connecting ring 211 and the connecting ring 221 may be of an integrated structure, both of which may rotate about an axis X under the driving of a driving mechanism 500, and thus by this rotation movement, the distribution valve is switched between a first state and a second state described hereinafter.

The valve body 200 further includes a universal joint 201 which is connected between the rear end of the first material suction pipe 210 and the outlet 401 of the material container 400. The universal joint 201 is of a hollow structure to form a corresponding passage, so that concrete slurry may be easily pass through the first material suction pipe 210 into a predetermined conveying cylinder. The upper end of the universal joint 201 is connected with the outlet 401 of the material container 400 by a flange, and the lower end of the universal joint 201 has a convex circular surface engaged with a concave circular surface of the rear end of the first material suction pipe 210 to form a hinge engagement, so that the universal joint 201 may rotate relative to the first material suction pipe 210. In this way, the state of the distribute valve may be switched conveniently, while ensuring a sealing performance of the engagement between the rear end of the first material suction pipe 210 and the material container 400, so as to prevent concrete slurry from leaking through the engagement therebetween.

As shown in Fig. 2-1, the valve body 200 is located at a right position under driving of the driving mechanism 500, and is maintained in the first state where a hole of the connecting ring 211 is aligned and communicates with a delivery hole 310. In this case, the conveying cylinder corresponding to the delivery hole 310 may smoothly suck concrete slurry from the material container 400 through the first material suction pipe 210. As shown in Fig. 2-2, the valve body 200 is located at a left position under driving of the driving mechanism 500, and is maintained in the second state where the hole of the connecting ring 221 is aligned and communicates with the delivery hole 310. In this case, the conveying cylinder corresponding to the delivery hole 310 may press concrete slurry sucked in the first state into the delivery line through the first material pumping pipe 220. Concrete slurry is pumped to the outside, as shown by an arrow in Fig.2.

In the embodiment, since the distribution valve is under the material container 400, the self-flowing characteristic of concrete slurry may be fully utilized such that the conveying cylinder may more easily suck concrete slurry, thereby improving the sucking performance of the concrete pump. Besides, when concrete slurry is pumped through the first material pumping pipe 220 to the outside, since high pressure of concrete slurry mainly acts on an inner wall of the first material pumping pipe 220, the distribution valve has relatively high pressure withstanding capacity. Furthermore, the connecting ring and a corresponding pipe may be connected by a rubber spring or any other elastic mechanism, such that the pressing force between the connecting ring and the wear resistant plate 300 is maintained to improve the sealing performance at the engagement therebetween and to automatically compensate the clearance generated from wearing, thereby improving the pressure withstanding capacity of the distribution valve. Thus, the conveying cylinder allows concrete slurry to have higher pressure to meet the requirement of pumping concrete slurry at high pressure, thereby improving the efficiency of the concrete pump and widening the applications of the concrete pump.

According to the above description, the core concept of the present invention lies in: when the corresponding pipes withstanding high pressure are provided, the pipe communicating the material container 400 with the conveying cylinder is further provided separately, so that the sucking performance of the concrete pump is improved while meeting the requirement of pumping concrete slurry at high pressure. Furthermore, when the concrete pump is operated, different pipes are used for pumping and sucking material respectively, which may reduce the wearing rate of the valve body 200, so as to prolong the service life and the maintenance interval of the distribution valve.

In the embodiment, the structure of the first material pumping pipe 220 is as same as the S-shape bend pipe in the prior art; the operating plane of the wear resistant plate 300 is a vertical plane; and the end surfaces of the front end and the rear end of the first material pumping pipe 220 are also vertical planes. Such a structure may be fitted with the conveying cylinder of the concrete pump in the prior art. In addition, a suitable structure, e.g. a C-shape pipe, etc., may be selected for the first material pumping pipe 220 according to various actual operations or structures of the concrete pump.

In the embodiment, the first material suction pipe 210 is an L-shaped pipe, which includes a vertical part protruding upwardly and movably connected with the outlet 401 of the lower part of the material container 400, and a transverse part on which the connecting ring 211 is mounted. For utilizing the self-flowing characteristic of concrete slurry fully, the outlet 401 is preferably provided at the bottom of the material container 400 or at the lowest part of the material container 400, and is opened downwardly. Thus, on the one hand, such a structure is convenient for the conveying cylinder to suck concrete slurry, and on the other hand, it is convenient to wash the material container. Similarly, the first material suction pipe 210 is not limited to the L-shaped pipe, but may be selected to be of any other suitable structure and shape according to the actual situation and the specific structure of the concrete pump.

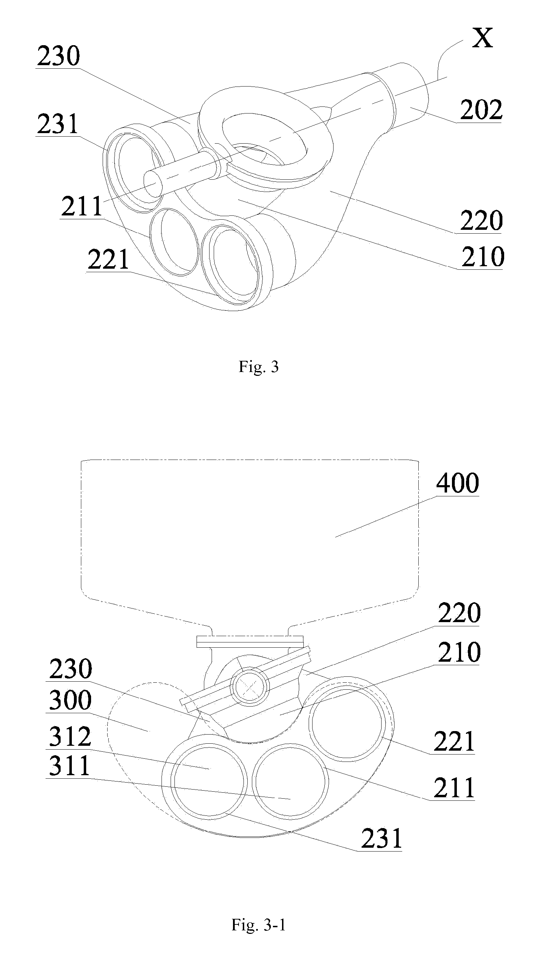

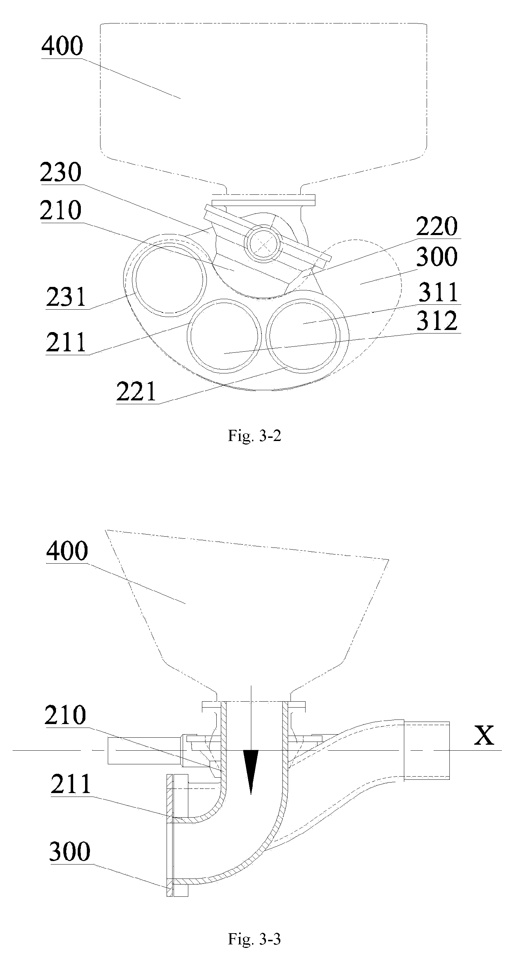

Referring to Figs. 3, 3-1 and 3-2, Fig. 3 is a three-dimensional schematic diagram illustrating the structure of a distribution valve for a concrete pump according to the second embodiment of the present invention; Fig. 3-1 is a structural schematic diagram illustrating the distribution valve for the concrete pump shown in Fig. 3 in a first state; Fig. 3-2 is a structural schematic diagram illustrating the distribution valve for the concrete pump shown in Fig. 3 in a second state; and Fig. 3-3 is a schematic diagram illustrating the sucking principle of the distribution valve for the concrete pump shown in Fig. 3.

Compared with the first embodiment, the distribution valve for the concrete pump according to the second embodiment further includes a second material pumping pipe 230 and the wear resistant plate 300 with two delivery holes. For the convenience of description, the two delivery holes are named as a first delivery hole 311 and a second delivery hole 312, respectively. The wear resistant plate may be the same as the glasses plate in the prior art. In the embodiment, the second material pumping pipe 230 is also an S-shape bend pipe. The second material pumping pipe 230 and the first material pumping pipe 220 are symmetrical with respect to the first material suction pipe 210. The rear end of the first material pumping pipe 220 and the rear end of the second material pumping pipe 230 are converged to form an outlet end 202, so as to form a "Y" shape structure body. The outlet end 202 rotatably communicates with the delivery line, and the midline of the outlet end 202 coincides with the above-mentioned axis X. Thus, while the driving mechanism 500 drives the valve body 200 to switch the state, the outlet end 202 may be in communication with the delivery line, so as to maintain the service performance of the concrete pump while reducing the resistance of pumping material. Similarly, the front end of the second material pumping pipe 230 also has an annular connecting ring 231 cooperating with the wear resistant plate 300. The cooperation states between the connecting rings 211, 221, 231 and the wear resistant plate 300 may be different according to the different states of the distribution valve.

As shown in Figs. 3-1 and 3-2, in the first state, the holes of the connecting ring 211 and the connecting ring 231 are in communication with the first delivery hole 311 and the second delivery hole 312 respectively, the hole of the connecting ring 221 opposites to the operating plane of the wear resistant plate 300, and the front end of the first material pumping pipe 220 is in a closed state. In the second state, the holes of the connecting ring 211 and the connecting ring 221 are in communication with the second delivery hole 312 and the first delivery hole 311 respectively, in this case, the hole of the connecting ring 231 is opposite to the operating plane of the wear resistant plate 300 and the front end of the second material pumping pipe 230 is in a closed state.

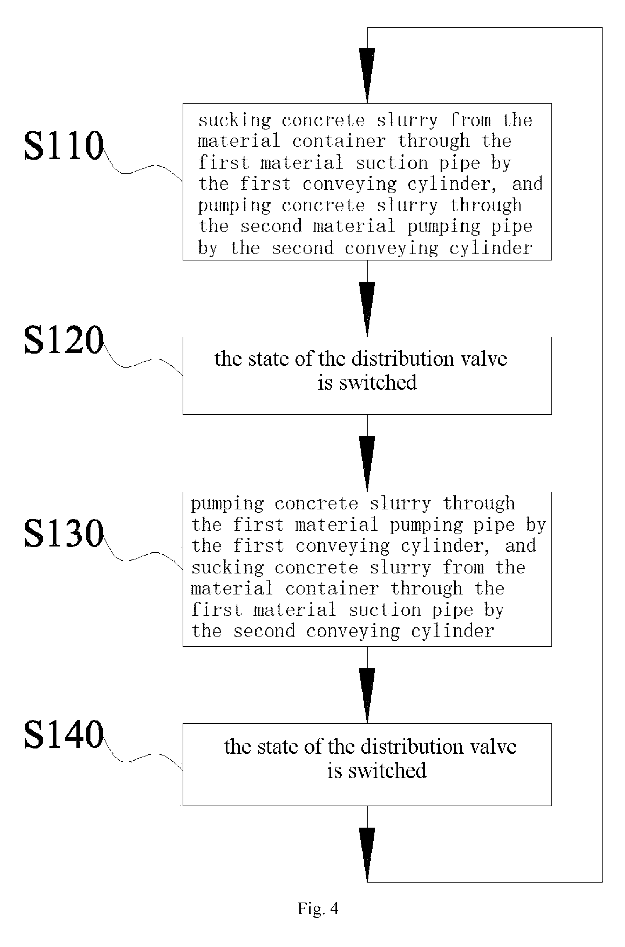

Hereinafter, the operating principle of the distribution valve according to the second embodiment will be described in conjunction with the two conveying cylinders (not shown) of the concrete pump; and a method for controlling the concrete pump according to the present invention will be described together. The control method will not be described lonely. Referring to Fig.4, Fig.4 is a flowchart diagram illustrating a method for controlling a concrete pump according to the present invention. For the convenience of description, the conveying cylinder corresponding to the first delivery hole 311 is referred to as the first conveying cylinder, and the conveying cylinder corresponding to the second delivery hole 312 is referred to as the second conveying cylinder.

Beginning with the first state shown in Fig. 3-1, the method for controlling the concrete pump may include the following steps.

In S 110, the first conveying cylinder sucks concrete slurry from the material container 400 through the first material suction pipe 210, and the second conveying cylinder pumps concrete slurry through the second material pumping pipe 230 to the outside. In the first state, the holes of the connecting ring 211 and the connecting ring 231 are in communication with the first delivery hole 311 and the second delivery hole 312 respectively, so that the first conveying cylinder corresponding to the first delivery hole 311 may suck a predetermined amount of concrete slurry from the material container 400. For the sucking principle, please refer to Fig.3-3. Meanwhile, a second conveying cylinder corresponding to the second delivery hole 312 may pump concrete slurry to the delivery line through the second material pumping pipe 230. The first conveying cylinder and the second conveying cylinder are reversed when reaching the predetermined positions.

In S 120, the state of the distribution valve is switched. That is, the distribution valve body is rotated by a predetermined angle under driving of the driving mechanism 500, so as to be switched to the second state shown in Fig. 3-2.

In S 130, the first conveying cylinder pumps concrete slurry through the first material pumping pipe 220 to the outside, and the second conveying cylinder sucks concrete slurry from the material container 400 through the first material suction pipe 210. In the second state, the holes of the connecting ring 211 and the connecting ring 221 are in communication with the second delivery hole 312 and the first delivery hole 311 respectively, in this case, the first conveying cylinder and the second conveying cylinder move in reverse directions, so that the second conveying cylinder corresponding to the second delivery hole 312 sucks concrete slurry through the first material suction pipe 210, and the first conveying cylinder corresponding to the first delivery hole 311 pumps concrete slurry to the delivery line through the first material pumping pipe 220. The first conveying cylinder and the second conveying cylinder are reversed when reaching the predetermined positions.

In S 140, the state of the distribution valve is switched to the first state shown in Fig.3-1 again. Return to step S100 and repeat the above-mentioned process, so as to pump concrete slurry to the predetermined position continuously.

The three pipes of the valve body 200 of the distribution valve according to the second embodiment are fixed relative to each other and may be rotatablely swung integratively under driving of the driving mechanism 500 to switch from one state to another state. Such a structure is simple in structure and is convenient for controlling.

According to the above core concept of the present invention, the object of the present invention may be realized in other manners. The third embodiment of the present invention provides a distribution valve for a concrete pump having another structure.

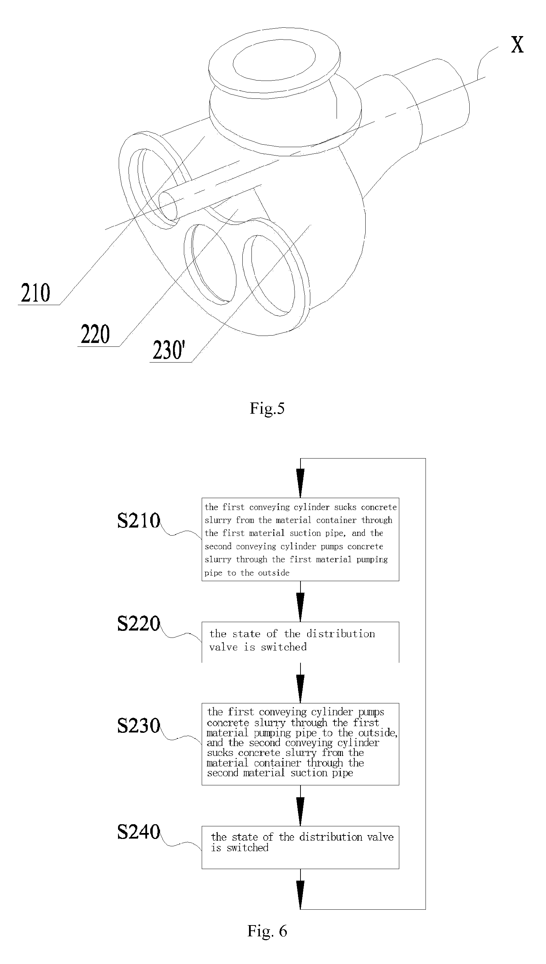

Referring to Fig.5, a structural schematic diagram illustrating a distribution valve for a concrete pump according to the third embodiment of the present invention is shown. A valve body 200 of the distribution valve for the concrete pump includes a second material suction pipe 230'. The second material suction pipe 230' has a front end provided with a connecting ring, and a rear end communicating with the material container 400, such that the corresponding conveying cylinder may suck material through the second material suction pipe 230'. In the embodiment, preferably, the first material suction pipe 210 and the second material suction pipe 230' are disposed symmetrically, and converge at the upper ends of them to form a sucking passage communicating with the outlet 401 of the material container 400. The sucking passage may communicate with the material container 400 through a universal joint. The other parts of this distribution valve in this embodiment may be the same as the structure of the distribution valve for concrete pump according to the second embodiment. The rear end of the first material pumping pipe 220 rotatably communicates with the delivery line, and the midline of the rear end coincides with the above-mentioned axis X. The rear end may be kept in communication with the delivery line when the state of the valve body 200 is switched under driving of the driving mechanism 500.

Thus, by the corresponding delivery holes and connecting rings, in the first state, the first conveying cylinder may communicate with the first material suction pipe 210, and the second conveying cylinder may communicate with the first material pumping pipe 220; and in the second state, the first conveying cylinder may communicate with the first material pumping pipe 220, and the second conveying cylinder may communicate with the second material suction pipe 230'.

Hereinafter, the operating principle of the distribution valve according to the third embodiment will be described in conjunction with two conveying cylinders (not shown) of the concrete pump; and another method for controlling the concrete pump according to the present invention will be described together.

Referring to Fig. 6, a flowchart diagram of another method for controlling a concrete pump according to the present invention is shown. The method includes the following steps.

In 5210, the first conveying cylinder sucks concrete slurry from the material container 400 through the first material suction pipe 210, and the second conveying cylinder pumps concrete slurry through the first material pumping pipe 220 to the outside. The first conveying cylinder and the second conveying cylinder are reversed when reaching the predetermined positions.

In S220, the state of the distribution valve is switched. That is, the distribution valve body is rotated by a predetermined angle under driving of the driving mechanism 500, so as to be switched to the second state.

In 5230, the first conveying cylinder pumps concrete slurry through the first material pumping pipe 220 to the outside, and the second conveying cylinder sucks concrete slurry from the material container 400 through the second material suction pipe 230'. The first conveying cylinder and the second conveying cylinder are reversed when reaching the predetermined positions.

In S240, the state of the distribution valve is switched. Return to step S210, and repeat the above-mentioned process so as to pump concrete slurry to the predetermined position continuously.

According to the above description, besides the three pipes, a fourth pipe may be further provided in order to make each pipe be worn at a same speed. Based on the distribution valve for the concrete pump according to the second embodiment, the first material suction pipe 210 and the fourth pipe may communicate with the material container 400 respectively, so that the first material pumping pipe 220 and the second material pumping pipe 230 may communicate with the delivery line respectively. In one state, one conveying cylinder pumps material through the second material pumping pipe 230, and the other conveying cylinder sucks material through the first material suction pipe 210. And in the other state, one conveying cylinder sucks material through the fourth pipe, and the other conveying cylinder pumps material through the first material pumping pipe 220. Based on the distribution valve for the concrete pump according to the third embodiment, the first material suction pipe 210 and the second material suction pipe 230' may communicate with the material container 400 respectively, so that the first material pumping pipe 220 and the fourth pipe may communicate with the delivery line respectively. In one state, one conveying cylinder pumps material through the first material pumping pipe 220, and the other conveying cylinder sucks material through the first material suction pipe 210; and in the other state, one conveying cylinder pumps material through the fourth pipe, and the other conveying cylinder sucks material through the second material suction pipe 230', and so on.

It is understood that the three pipes of the valve body 200 are not limited to an integrated structure, but may be a detachable structure which may synchronously move under driving of the driving mechanism so as to achieve the object of the present invention.

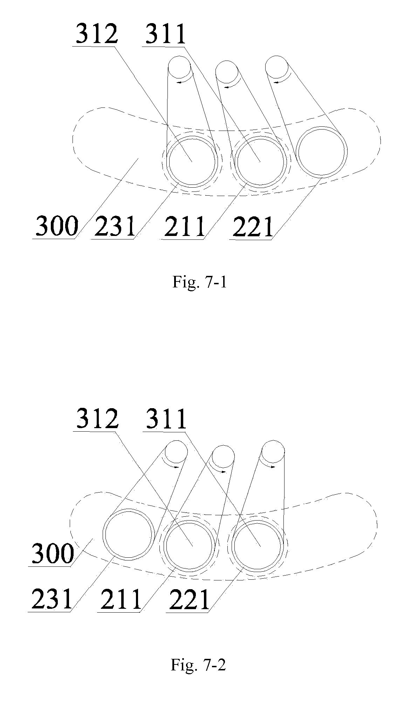

Referring to Figs. 7-1 and 7-2 , Fig. 7-1 is a schematic diagram illustrating the movement principle of a distribution valve for a concrete pump according to the fourth embodiment of the present invention in a first state; and Fig. 7-2 is a schematic diagram illustrating the movement principle of a distribution valve for a concrete pump according to the fourth embodiment of the present invention in a second state. In the drawings, only the relative movement principle between the three connecting rings and the wear resistant plate is shown. In the distribution valve according to the fourth embodiment, the first material suction pipe 210 is rotatably connected with the material container 400; the first material pumping pipe 220 and the second material pumping pipe 230 are rotatably connected with the suitable parts of the delivery line respectively; and these three pipes are relatively independent. As shown in Fig. 7-1, in the first state which is the same as the first state of the second embodiment, the holes of the connecting ring 211 and the connecting ring 231 communicate with the first delivery hole 311 and the second delivery hole 312 respectively; and in the second state, the holes of the connecting ring 211 and the connecting ring 221 communicate with the second delivery hole 312 and the first delivery hole 311 respectively. The operating principle and the operating process of the fourth embodiment are the same as that of the second embodiment, which will not be described repeatedly herein.

Based on the distribution valve described above, the present invention further provides a concrete pump which includes a material container 400, a conveying cylinder, a delivery line, a driving mechanism 500 and any one of distribution valves for the concrete pump described above. The conveying cylinder is in communication with the delivery hole of the wear resistant plate 300, and stretches and withdraws under driving of a hydraulic cylinder. Corresponding to the distribution valve described above, the concrete pump according to the present invention may also have the corresponding technical effects and technical features which will not be described herein. Based on the above-mentioned concrete pump, a concrete pump truck is also provided, which includes a chassis, a boom system and the concrete pump described above. The chassis is a movable chassis. The boom system includes a plurality of boom sections hinged in sequence and a delivery line transporting concrete slurry to a predetermined position. The concrete pump described above is mounted on the chassis, and the delivery line of the concrete pump is in communication with the delivery line of the boom system.

Although the preferred embodiments of the present invention has been described above, it should be noted that some improvements, modifications or variations may be made by the skilled in the art without departing from the principles of the present invention. For example, the connecting ring may be a part of the corresponding pipe, or may be a component provided separately and having a relatively high wear resistant performance. These improvements, modifications and variations should be deemed to fall into the scope of protection of the present invention.

## Claims

1. A distribution valve for a concrete pump, comprising a valve body (200) and a wear resistant plate (300), the valve body (200) comprises a first material suction pipe (210) and a first material pumping pipe (220), a rear end of the first material suction pipe (210) communicates with an outlet (401) of a material container (400), a rear end of the first material pumping pipe (220) rotatably communicates with a delivery line of the concrete pump;
the valve body (200) is driven by a driving mechanism (500) to switch between a first state where a front end of the first material suction pipe (210) is in communication with a conveying cylinder, and a second state where a front end of the first material pumping pipe (220) is in communication with the conveying cylinder.

2. The distribution valve for the concrete pump according to claim 1, wherein further comprising a wear resistant plate (300) with delivery holes, through which the first material suction pipe (210) or the first material pumping pipe (220) is in communication with the conveying cylinder, wherein front ends of the first material suction pipe (210) and the first material pumping pipe (220) are respectively provided with connecting rings matched with the wear resistant plate (300), in the first state a hole of the connecting ring of the first material suction pipe (210) is in communication with the delivery hole, and in the second state a hole of the connecting ring of the first material pumping pipe (220) is in communication with the delivery hole.

3. The distribution valve for the concrete pump according to claim 2, wherein, the wear resistant plate (300) has two delivery holes, which are a first delivery hole (311) and a second delivery hole (312); the valve body (200) further comprises a second material pumping pipe (230), a front end of the second material pumping pipe (230) is provided with a connecting ring matched with the wear resistant plate (300), and a rear end of the second material pumping pipe (230) rotatably communicates with the delivery line; and
in the first state, the hole of the connecting ring of the first material suction pipe (210) communicates with the first delivery hole (311), the hole of the connecting ring of the second material pumping pipe (230) communicates with the second delivery hole (312); and in the second state, the first material suction pipe (210) communicates with the second delivery hole (312), the hole of the connecting ring of the first material pumping pipe (220) communicates with the first delivery hole (311).

4. The distribution valve for the concrete pump according to claim 3, wherein, the valve body (200) further comprises a universal joint (201), the universal joint (201) has one end rotatably connected with the rear end of the first material suction pipe (210) and the other end connected with the outlet (401) of the material container (400).

5. The distribution valve for the concrete pump according to claim 3, wherein, the first material suction pipe (210), the first material pumping pipe (220) and the second material pumping pipe (230) are synchronously swayed under driving of the driving mechanism (500).

6. The distribution valve for the concrete pump according to claim 3, wherein, the rear end of the first material pumping pipe (220) and the rear end of the second material pumping pipe (230) converge to form a outlet end (202) which rotatably communicates with the delivery line; the first material pumping pipe (220) and the second material pumping pipe (230) are driven by the driving mechanism (500) to rotate about the midline of the outlet end (202).

7. The distribution valve for the concrete pump according to claim 6, wherein, the valve body (200) further comprises a universal joint (201), the universal joint (201) has one end rotatably connected with the rear end of the first material suction pipe (210); the first material pumping pipe (220) is fixed relative to the first material suction pipe (210).

8. The distribution valve for the concrete pump according to any one of claims 3 to 7, wherein, the first material pumping pipe (220) and the second material pumping pipe (230) are symmetrically disposed with respect to the first material suction pipe (210).

9. The distribution valve for the concrete pump according to claim 2, wherein, the wear resistant plate (300) has two delivery holes, which are a first delivery hole (311) and a second delivery hole (312) respectively; the valve body (200) further comprises a second material suction pipe (230'), a front end of the second material suction pipe (230') is provided with a connecting ring matched with the wear resistant plate (300), and a rear end of the second material suction pipe (230') communicates with the outlet (401) of the material container; and in the first state, the hole of the connecting ring of the first material suction pipe (210) communicates with the first delivery hole (311), and the hole of the connecting ring of the first material pumping pipe (220) communicates with the second delivery hole (312); and in the second state, the first material pumping pipe (220) communicates with the second delivery hole (312), the hole of the connecting ring of the second material suction pipe (230') communicates with the first delivery hole (311).

10. The distribution valve for the concrete pump according to claim 9, wherein, the first material suction pipe (210), the first material pumping pipe (220) and the second material suction pipe (230') are synchronously swayed under the driving of the driving mechanism (500).

11. The distribution valve for the concrete pump according to claim 10, wherein, the rear end of the first material suction pipe (210) and the rear end of the second material suction pipe (230') converge to form a material suction passage which is connected with the outlet (401) of the material container (400).

12. The distribution valve for the concrete pump according to claim 11, wherein, the valve body (200) further comprises a universal joint, the universal joint has one end rotatably connected with a rear end of the material suction passage.

13. The distribution valve for the concrete pump according to any one of claims 9 to 11, wherein, the first material suction pipe (210) and the second material suction pipe (230') are symmetrically disposed with respect to the first material pumping pipe (220).

14. A concrete pump, comprising a material container (400), a conveying cylinder, a delivery line, a driving mechanism (500), wherein, the concrete pump further comprises the distribution valve for the concrete pump according to any one of claims 1 to 13.

15. The distribution valve for the concrete pump according to claim 14, wherein, the distribution valve for the concrete pump is arranged outside of the material container (400).

16. A concrete pump truck comprising a chassis, a boom system, wherein, the concrete pump truck further comprises the concrete pump according to claim 15, the concrete pump is mounted on the chassis, and the delivery line communicates with a delivery line of the boom system.

17. A method for controlling a concrete pump which comprises two conveying cylinders and the distribution valve for the concrete pump according to any one of claims 3 to 8, the two conveying cylinders being referred to as a first conveying cylinder and a second conveying cylinder respectively, wherein, the method comprises the steps of
S 110, sucking concrete slurry from the material container (400) through the first material suction pipe (210) by the first conveying cylinder, and pumping concrete slurry through the second material pumping pipe (230) by the second conveying cylinder;
S120, switching the valve body of the distribution valve body (200) to the other state; and
S130, pumping concrete slurry through the first material pumping pipe (200) by the first conveying cylinder, and sucking concrete slurry from the material container (400) through the first material suction pipe (210) by the second conveying cylinder.

18. A method for controlling a concrete pump which comprises two conveying cylinders and the distribution valve for the concrete pump according to any one of claims 9 to 13, the two conveying cylinders being referred to as a first conveying cylinder and a second conveying cylinder respectively, wherein, the method comprises the steps of
S210, sucking concrete slurry from the material container (400) through the first material suction pipe (210) by the first conveying cylinder, and pumping concrete slurry through the first material pumping pipe (220) by the second conveying cylinder;
S220, switching the distribution valve body (200) to the other state; and
S230, pumping concrete slurry through the first material pumping pipe (220) by the first conveying cylinder, and sucking concrete slurry from the material container (400) through the second material suction pipe (230') by the second conveying cylinder.
